# EUROPÄISCHE PATENTSCHRIFT

(11) **EP 3 411 747 B1**
(45) Veröffentlichungstag und Bekanntmachung des Hinweises auf die Patenterteilung: **10.05.2023**
(21) Anmeldenummer: 17702086.4
(22) Anmeldetag: 30.01.2017
(51) Int. Cl.: G02B 27/01

(54) **PROJEKTIONSVORRICHTUNG FÜR EINE DATENBRILLE, VERFAHREN ZUM DARSTELLEN VON BILDINFORMATIONEN MITTELS EINER PROJEKTIONSVORRICHTUNG UND STEUERGERÄT**
PROJECTION DEVICE FOR HEAD MOUNTED DISPLAYS, METHOD OF PRESENTING IMAGES USING A HEAD MOUNTED DISPLAY AND CONTROLLER
DISPOSITIF DE PROJECTION POUR VISIOCASQUE, METHODE DE PRESENTATION D'IMAGES UTILISANT UN VISIOCASQUE ET CONTROLEUR

(30) Priorität: 02.02.2016 DE 102016201567
(43) Veröffentlichungstag der Anmeldung: 12.12.2018
(73) Patentinhaber: Robert Bosch GmbH, 70442 Stuttgart (DE)
(72) Erfinder: PETERSEN, Andreas, 71672 Marbach (DE)
(86) Internationale Anmeldenummer: PCT/EP2017/051875
(87) Internationale Veröffentlichungsnummer: WO 2017/133992

(56) Entgegenhaltungen:
- US-A1- 2010 149 073
- US-B1- 6 252 989
- US-B1- 6 351 335
- YOSHIDA A ET AL: "DESIGN AND APPLICATIONS OF A HIGH-RESOLUTION INSERT HEAD-MOUNTED-DISPLAY", PROCEEDINGS OF THE VIRTUAL REALITY ANNUAL INTERNATIONAL SYMPOSIUM. RESEARCH TRIANGLE PARK, MAR. 11 - 15, 1995; [PROCEEDINGS OF THE VIRTUAL REALITY ANNUAL INTERNATIONAL SYMPOSIUM], LOS ALAMITOS, IEEE COMP. SOC. PRESS, US, 11. März 1995 (1995-03-11), Seiten 84-93, XP000529974, DOI: 10.1109/VRAIS.1995.512483 ISBN: 978-0-7803-2543-2

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Es sind Datenbrillen zum Einblenden von Informationen in ein Sichtfeld eines Nutzers bekannt.

Die Druckschrift US 2010/0149073 A1 zeigt ein Anzeigesystem für den naheen Einsatz am Auge und eine entsprechende Anwendung.

Dur Druckschrift US 6,351,335 B1 zeigt eine Anzeige zur extrem hohen Auflösung für eine Netzhautgrube.

Die Druckschrift US 6,252,989 B1 zeigt ein System zur Bildcodierung für eine Netzhautgrube und ein Verfahren zur Bildbandbreitenreduktion.

### Offenbarung der Erfindung

Vor diesem Hintergrund werden mit dem hier vorgestellten Ansatz eine Projektionsvorrichtung für eine Datenbrille, ein Verfahren zum Darstellen von Bildinformationen mittels einer Projektionsvorrichtung, weiterhin ein Steuergerät, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird eine Projektionsvorrichtung für eine Datenbrille vorgestellt, wobei die Projektionsvorrichtung folgende Merkmale aufweist:
eine Bilderzeugungseinheit zum Erzeugen zumindest eines eine erste Bildinformation repräsentierenden ersten Lichtstrahls und eines eine zweite Bildinformation repräsentierenden zweiten Lichtstrahls, wobei sich der erste Lichtstrahl und der zweite Lichtstrahl hinsichtlich einer Strahldivergenz voneinander unterscheiden und sich die erste Bildinformation und die zweite Bildinformation hinsichtlich einer wahrnehmbaren Bildschärfe voneinander unterscheiden; und
zumindest ein Umlenkelement, das ausgebildet ist, um die erste Bildinformation unter Verwendung des ersten Lichtstrahls innerhalb eines ersten Sichtbereichs eines Auges darzustellen und die zweite Bildinformation unter Verwendung des zweiten Lichtstrahls innerhalb eines zweiten Sichtbereichs des Auges darzustellen, wobei sich der zweite Sichtbereich außerhalb des ersten Sichtbereichs befindet.

Unter einer Datenbrille kann eine Brille zum Darstellen visueller Informationen in einem Sichtfeld eines Trägers der Datenbrille verstanden werden. Unter einer visuellen Information kann beispielsweise ein Bildpunkt oder ein Bildinhalt verstanden werden. Je nach Ausführungsform kann die erste oder die zweite Bildinformation ein monochromes oder farbiges Bild repräsentieren. Die beiden Bildinformationen können beispielsweise ein und denselben Bildinhalt in unterschiedlichen virtuellen Bildentfernungen und damit unterschiedlich wahrgenommen Bildschärfen repräsentieren. So kann es sich etwa bei der ersten Bildinformation um ein als scharf wahrgenommenes Bild und bei der zweiten Bildinformation um ein als unscharf wahrgenommenes Bild handeln. Bei den beiden Lichtstrahlen kann es sich beispielsweise jeweils um einen Laserstrahl (monochrome Bilddarstellung) oder um jeweils mehrere näherungsweise überlagerte Laserstrahlen (mehrfarbige Bilddarstellung) handeln. Unter der Bildschärfe ist keine physikalische Eigenschaft des Lichtstrahls, sondern eine Folge des Abstands zwischen dem Auge des Betrachters und der Entfernung des virtuellen Bildes zu verstehen. Hierbei stellt etwa der erste Lichtstrahl ein virtuelles Bild in großer Entfernung dar, während der zweite Lichtstrahl ein Bild auf der Ebene eines Brillenglases darstellen kann. Dieses zweite Bild kann aufgrund der kurzen Distanz zum Auge nicht scharf abgebildet werden.

Unter einem Umlenkelement kann ein Element zum Umlenken des ersten und des zweiten Lichtstrahls verstanden werden. Insbesondere handelt es sich entsprechend der Erfindung bei dem Umlenkelement um ein Hologramm oder nicht entsprechend der Erfindung um einen Spiegel. Denkbar sind nicht entsprechend der Erfindung beispielsweise auch andere Wirkprinzipien. So kann das Umlenkelement etwa auch als optisches Phasenarray, elektro- oder magnetooptischer Umlenker oder als Arrays solcher Umlenker realisiert sein. Das Umlenkelement kann beispielsweise in ein Brillenglas der Datenbrille integriert sein. Je nach Ausführungsform kann das Umlenkelement zumindest einen ersten Umlenkabschnitt zum Umlenken des ersten Lichtstrahls in den ersten Sichtbereich und einen zweiten Umlenkabschnitt zum Umlenken des zweiten Lichtstrahls in den zweiten Sichtbereich umfassen. Bei den Umlenkabschnitten kann es sich beispielsweise um Hologramm- oder nicht entsprechend der Erfindung um Spiegelschichten handeln.

Unter einem Sichtbereich kann ein beim Tragen der Datenbrille von einem Auge des Trägers wahrnehmbarer Bereich verstanden werden. Der erste und der zweite Sichtbereich können beispielsweise aneinandergrenzen oder sich zumindest teilweise überlappen. Insbesondere kann es sich etwa bei dem ersten Sichtbereich um einen zentralen Sichtbereich des Auges und bei dem zweiten Sichtbereich um einen peripheren Sichtbereich des Auges handeln.

Jeder Lichtstrahl kann den gesamten Sichtbereich abdecken. Hierbei kann lediglich die unscharf wahrgenommene Bildinformation des zweiten Lichtstrahls abhängig von der Blickrichtung des Nutzers selektiv abschaltbar sein.

Bei dem ersten Lichtstrahl kann es sich beispielsweise auch um ein Strahlenbündel aus einer Mehrzahl erster Lichtstrahlen handeln. Ebenso kann es sich bei dem zweiten Lichtstrahl um ein Strahlenbündel aus einer Mehrzahl zweiter Lichtstrahlen handeln.

Der hier vorgestellte Ansatz beruht auf der Erkenntnis, dass eine Datenbrille mithilfe eines geeigneten Umlenkelements, insbesondere beispielsweise eines holografischen optischen Elements, unterschiedlich scharfe Bilder in unterschiedliche Sichtbereiche eines Auges eines Betrachters projizieren kann. Beispielsweise kann hierbei durch Ausnutzung der Physiologie des menschlichen Auges erreicht werden, dass scharfe Bildinhalte nur dort angezeigt werden, wo sie auch wahrgenommen werden können.

Dies ermöglicht einen ressourcensparenden Systemaufbau mit einer möglichst geringen Anzahl an Komponenten. So kann beispielsweise eine Anzahl erforderlicher Lichtquellen bei monochromer Bilddarstellung auf zwei Lichtquellen und bei vollfarbiger Bilddarstellung (RGB) auf sechs Lichtquellen reduziert werden. Bei zwei Grundfarben und den daraus resultierenden Mischfarben können beispielsweise auch vier Lichtquellen ausreichend sein. Somit kann auch eine Anzahl erforderlicher Reflexionsschichten wie etwa Hologrammschichten in entsprechender Weise reduziert werden. Zugleich ermöglicht der hier vorgestellte Ansatz die Realisierung einer Datenbrille mit großem Sichtfeld, auch field of view genannt, und großer effektiver Eyebox. Somit kann die Funktionalität der Datenbrille verbessert werden.

Gemäß einer Ausführungsform der Erfindung ist die Bilderzeugungseinheit ausgebildet um den ersten Lichtstrahl und den zweiten Lichtstrahl derart zu erzeugen, dass die erste Bildinformation eine höhere wahrgenommene Bildschärfe als die zweite Bildinformation aufweist. Das Umlenkelement ist ausgebildet, um die erste Bildinformation innerhalb eines zentralen Sichtbereichs des Auges als des ersten Sichtbereichs und, zusätzlich oder alternativ, die zweite Bildinformation innerhalb eines peripheren Sichtbereichs des Auges als des zweiten Sichtbereichs darzustellen. Hierbei kann die erste Bildinformation ein Bild mit einer höheren Bildschärfe aufweisen. Die unterschiedliche Bildschärfe kann insbesondere durch die virtuelle Bildentfernung zustande kommen. So kann mit einer entsprechend starken Kontaktlinse für extreme Weitsichtigkeit auch die zweite Bildinformation scharf wahrnehmbar sein. Unter einem zentralen Sichtbereich kann ein Bereich verstanden werden, in dem das Auge Bilder mit hoher Sehschärfe, d. h. foveal, wahrnimmt. Unter einem peripheren Sichtbereich kann ein Bereich verstanden werden, in dem das Auge Bilder mit reduzierter Sehschärfe, d. h. peripher, wahrnimmt. Beispielsweise kann der zentrale Sichtbereich zumindest teilweise von dem peripheren Sichtbereich umgeben sein. Dadurch wird ermöglicht, dass Bildinformationen mit hoher Bildschärfe nur in denjenigen von dem Auge wahrnehmbaren Bereichen dargestellt werden, in denen das Auge auch tatsächlich scharf sehen kann. Dadurch kann die Effizienz der Projektionsvorrichtung erhöht werden. Somit können die Herstellungskosten der Projektionsvorrichtung reduziert werden.

Es ist vorteilhaft, wenn das Umlenkelement ausgebildet ist, um die erste Bildinformation innerhalb eines einer ersten Position des Auges zugeordneten ersten Winkelbereichs des ersten Sichtbereichs und, zusätzlich oder alternativ, innerhalb eines einer weiteren Position des Auges zugeordneten weiteren Winkelbereichs des ersten Sichtbereichs darzustellen. Unter einem Winkelbereich kann etwa eine Eyebox mit einem bestimmten Öffnungswinkel verstanden werden, innerhalb derer das Auge bei einer bestimmten Augenstellung die erste Bildinformation wahrnehmen kann. Der Öffnungswinkel kann je nach Ausführungsform beispielsweise zwischen 5 und 20 Grad liegen. Durch diese Ausführungsform kann die erste Bildinformation an unterschiedlichen Winkelbereichen im ersten Sichtbereich dargestellt werden.

Gemäß einer weiteren Ausführungsform kann das Umlenkelement ausgebildet sein, um die erste Bildinformation innerhalb eines benachbart zu dem zweiten Winkelbereich angeordneten oder zumindest teilweise mit dem zweiten Winkelbereich überlappenden Winkelbereichs als des ersten Winkelbereichs darzustellen. Dadurch kann eine lückenlose Darstellung der ersten Bildinformation im ersten Sichtbereich gewährleistet werden.

Zudem kann das Umlenkelement ausgebildet sein, um die erste Bildinformation innerhalb zumindest eines einer weiteren Position des Auges zugeordneten weiteren Winkelbereichs des ersten Sichtbereichs darzustellen. Dadurch kann die erste Bildinformation in einer Mehrzahl unterschiedlicher Winkelbereiche dargestellt werden. Beispielsweise können die Winkelbereiche hierzu rasterförmig angeordnet sein.

Von Vorteil ist auch, wenn das Umlenkelement zumindest eine Hologrammschicht zum Umlenken des ersten Lichtstrahls und, zusätzlich oder alternativ, des zweiten Lichtstrahls umfasst. Unter einer Hologrammschicht kann ein als Schicht realisiertes holografisches optisches Element verstanden werden. Durch diese Ausführungsform kann das Umlenkelement einfach und kostengünstig realisiert werden.

Zudem kann die Projektionsvorrichtung zumindest ein weiteres Umlenkelement aufweisen, das ausgebildet sein kann, um die erste Bildinformation unter Verwendung des ersten Lichtstrahls innerhalb des ersten Sichtbereichs darzustellen. Insbesondere kann das Umlenkelement ausgebildet sein, um zumindest eine erste Eyebox zum Wahrnehmen der ersten Bildinformation innerhalb des ersten Sichtbereichs zu erzeugen. Entsprechend kann das weitere Umlenkelement ausgebildet sein, um zumindest eine zweite Eyebox zum Wahrnehmen der ersten Bildinformation innerhalb des ersten Sichtbereichs zu erzeugen. Hierbei können die erste Eyebox und die zweite Eyebox insbesondere benachbart zueinander angeordnet sein. Dadurch ist es möglich, Eyeboxen mit größeren Winkelbereichen zu generieren.

Die Projektionsvorrichtung kann gemäß einer weiteren Ausführungsform ein Brillenglas aufweisen. Hierbei kann das Umlenkelement als Teil des Brillenglases realisiert sein. Unter einem Brillenglas kann beispielsweise eine Scheibe oder eine Linse aus Glas oder Kunststoff verstanden werden. Je nach Ausführungsform kann das Brillenglas ausgeformt sein, um Brechungsfehler des Auges zu korrigieren. Diese Ausführungsform ermöglicht eine besonders einfache, unauffällige und kostengünstige Integration des Umlenkelements.

Hierbei kann sich das Umlenkelement über zumindest einen Hauptanteil einer Oberfläche des Brillenglases erstrecken. Dadurch wird eine möglichst großflächige Abdeckung eines Sichtfelds des Auges durch das Umlenkelement ermöglicht.

Gemäß einer weiteren Ausführungsform kann die Projektionsvorrichtung eine Augenpositionsermittlungseinheit zum Ermitteln einer Augenposition des Auges aufweisen. Die Bilderzeugungseinheit kann ausgebildet sein, um den ersten Lichtstrahl und, zusätzlich oder alternativ, den zweiten Lichtstrahl in Abhängigkeit von der Augenposition zu erzeugen. Die Augenpositionsermittlungseinheit kann beispielsweise eine Kamera zum Erfassen der Augenposition umfassen. Durch diese Ausführungsform kann eine augenpositionsabhängige und somit energiesparende Darstellung der ersten oder zweiten Bildinformation erreicht werden.

Des Weiteren kann die Bilderzeugungseinheit ausgebildet sein, um den ersten Lichtstrahl und, zusätzlich oder alternativ, den zweiten Lichtstrahl derart zu erzeugen, dass die erste Bildinformation und, zusätzlich oder alternativ, die zweite Bildinformation ein zumindest zweifarbiges Bild repräsentiert. Dadurch kann die Darstellungsqualität der Projektionsvorrichtung verbessert werden.

Der hier vorgestellte Ansatz schafft ferner ein Verfahren zum Darstellen von Bildinformationen mittels einer Projektionsvorrichtung gemäß einer der vorstehenden Ausführungsformen, wobei das Verfahren der vorliegenden Erfindung die Schritte nach Anspruch 11 umfasst.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner ein Steuergerät, das ausgebildet ist, um die Schritte des hier vorgestellten Verfahrens in entsprechenden Einrichtungen durchzuführen, anzusteuern bzw. umzusetzen.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens in einer Projektionsvorrichtung nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung eines Funktionsprinzips eines Near-to-eye-Displays einer Datenbrille;
Fig. 2 eine schematische Darstellung eines Funktionsprinzips eines Near-to-eye-Displays einer Datenbrille;
Fig. 3 ein Diagramm zur Darstellung einer Sehschärfe als Funktion eines Winkels an einer optischen Achse;
Fig. 4 eine schematische Darstellung einer Datenbrille mit einer Projektionsvorrichtung gemäß einem Ausführungsbeispiel;
Fig. 5 eine schematische Darstellung einer Projektionsvorrichtung gemäß einem Ausführungsbeispiel;
Fig. 6 eine schematische Darstellung einer Anordnung von Eyeboxen zur Darstellung von Bildinformationen mittels eines Umlenkelements gemäß einem Ausführungsbeispiel;
Fig. 7 eine schematische Darstellung eines Zusammenhangs zwischen einer Orientierung eines Auges und einer Bildposition auf einem Umlenkelement gemäß einem Ausführungsbeispiel;
Fig. 8 eine schematische Darstellung zweier überlappender Winkelbereiche zur Darstellung von Bildinformationen mittels eines Umlenkelements gemäß einem Ausführungsbeispiel;
Fig. 9 ein Ablaufdiagramm eines Verfahrens gemäß einem Ausführungsbeispiel; und
Fig. 10 eine schematische Darstellung eines Steuergeräts gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

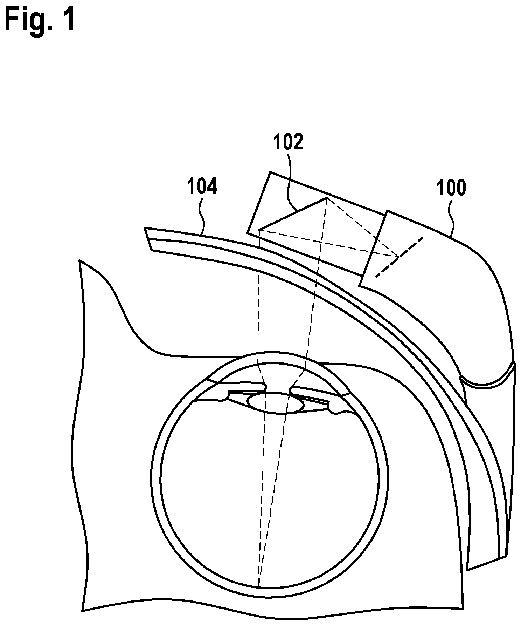

Fig. 1 zeigt eine schematische Darstellung eines Funktionsprinzips eines Near-to-eye-Displays 100 einer Datenbrille, kurz NTE-Display genannt. Gezeigt ist ein Mikrodisplay als Near-to-eye-Display 100, das über eine Umlenkoptik in Form eines Prismas 102 und eine Linse 104 betrachtet werden kann. Das Sichtfeld, auch field of view oder kurz FOV genannt, eines solchen Systems kann durch die Größe des Einkoppelprismas 102 begrenzt sein.

Datenbrillen blenden dem Nutzer Bildinformationen in dessen Sichtfeld ein. Generell kann zwischen Datenbrillen für virtuelle Realität, englisch virtual reality, und Datenbrillen für erweiterte Realität, englisch augmented reality oder kurz AR, unterschieden werden. Bei Datenbrillen für virtuelle Realität kann eine reale Umwelt ausgeblendet und durch eine virtuelle Welt ersetzt werden. Bei Datenbrillen für erweiterte Realität können virtuelle Bildinhalte der realen Umwelt überlagert werden. AR-Brillen können daher beispielsweise transparent oder teiltransparent ausgeführt sein. Mögliche Anwendungsbereiche von AR-Brillen sind beispielsweise Sportbrillen zum Anzeigen von Geschwindigkeit, Navigationsdaten, Trittfrequenz oder Pulsschlag, Sicherheitsbrillen für Werkstätten, Brillen oder Helme im Kontext von Fahrerassistenz- oder Navigationssystemen, Sicherheitsbrillen zum Anzeigen von Anweisungen, Bedienungsanleitungen oder Kabelverlegungen wie auch Brillen für Heimanwendungen, etwa zum Anzeigen eines virtuellen Bedienfelds oder eines Kochrezepts.

AR-Brillen können beispielsweise als NTE-Display oder als Retinal-scan-Display, kurz RSD, realisiert sein. Bei NTE-Displays wird ein reales Bild sehr nahe am Auge des Betrachters erzeugt, etwa mittels eines Mikrodisplays, und über eine Optik, etwa eine Lupe, betrachtet. Fig. 1 zeigt ein Beispiel eines solchen Systems. Hierbei erscheint das virtuelle Bild dem Auge in einer gewissen Entfernung und wird nur dann scharf gesehen, wenn das Auge auf diese Entfernung scharfstellt.

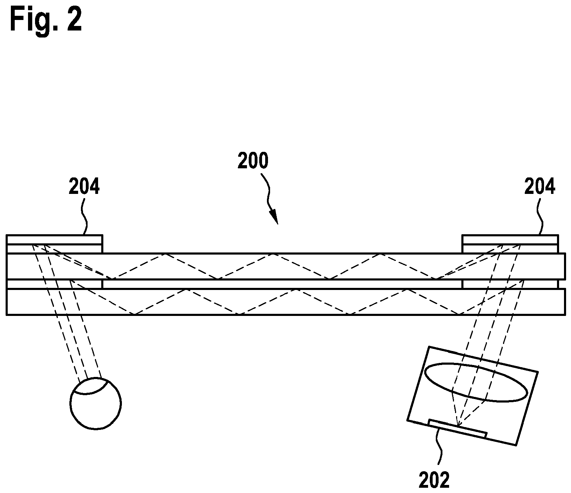

Fig. 2 zeigt eine schematische Darstellung eines Funktionsprinzips eines Near-to-eye-Displays 200 einer Datenbrille. Hierbei wird ein Mikrodisplay 202 über eine Umlenkungsoptik und eine Linse betrachtet. Im Unterschied zu dem in Fig. 1 gezeigten System erfolgt die Einkopplung des Bildes in das Auge hier nicht über ein zusätzliches optisches Element vor dem Brillenglas, sondern durch einen Lichtleiter innerhalb des Brillenglases. Zusätzlich sind Ein- und Auskoppelelemente 204, hier Hologramme, integriert. Der Platzbedarf der Ein- und Auskoppelelemente 204 hängt vom gewünschten Sichtfeld ab.

Bei Retinal-Scan-Displays wird das Bild direkt auf die Netzhaut geschrieben. Außerhalb des Auges existiert das Bild daher zu keinem Zeitpunkt.

Damit das Bild vom Auge wahrgenommen werden kann, ist es erforderlich, dass die Austrittspupille des Systems mit der Eintrittspupille des Auges räumlich überlappt.

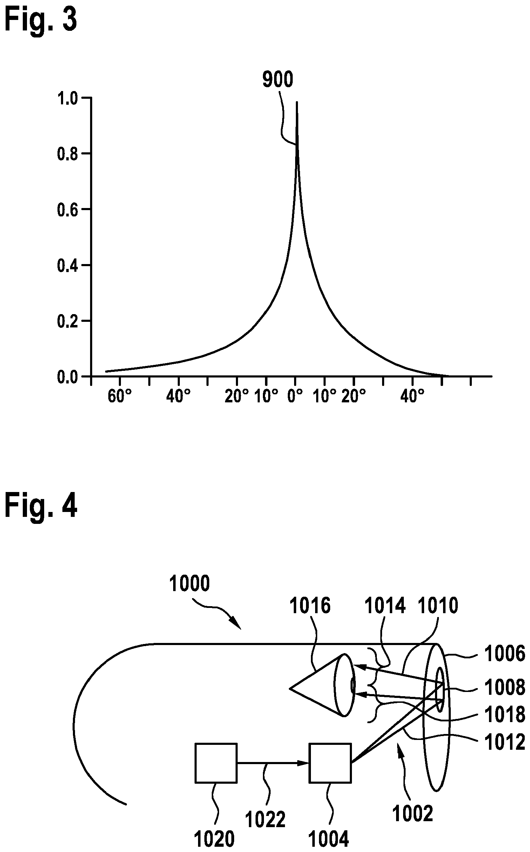

Fig. 3 zeigt ein Diagramm zur Darstellung einer Sehschärfe 900, hier auf der y-Achse aufgetragen, als Funktion eines Winkels an einer optischen Achse, hier auf der x-Achse aufgetragen. Die höchste Dichte an Sinneszellen befindet sich im Bereich der sogenannten Makula des Auges, wobei die höchste Sehschärfe in deren Zentrum, der sogenannten Sehgrube oder Fovea, erreicht wird. Wie aus Fig. 3 ersichtlich, ist der Bereich des scharfen Sehens sehr begrenzt. Innerhalb von nur plus/minus 5 Grad fällt die Sehschärfe auf 30 Prozent ihres Maximalwerts ab. Um den Bereich des scharfen Sehens größer erscheinen zu lassen, bewegt sich das menschliche Auge unbewusst einige Male pro Sekunde, um jeweils einen anderen Bereich der Umgebung auf die Fovea abzubilden.

Fig. 4 zeigt eine schematische Darstellung einer Datenbrille 1000 mit einer Projektionsvorrichtung gemäß einem Ausführungsbeispiel. Die Datenbrille 1000 umfasst eine Projektionsvorrichtung 1002 mit einer Bilderzeugungseinheit 1004 und einem hier beispielhaft in ein Brillenglas 1006 der Datenbrille 1000 integrierten Umlenkelement 1008. Die Bilderzeugungseinheit 1004 ist ausgebildet, um einen eine erste Bildinformation repräsentierenden ersten Lichtstrahl 1010 oder ein entsprechendes Strahlenbündel sowie einen eine zweite Bildinformation repräsentierenden zweiten Lichtstrahl 1012 oder ein entsprechendes Strahlenbündel zu erzeugen und in das Umlenkelement 1008 zu lenken. Die beiden Bildinformationen unterscheiden sich hierbei hinsichtlich der wahrnehmbaren Bildschärfe, wobei die beiden Bildinformationen ein und denselben Bildinhalt repräsentieren können. Das Umlenkelement 1008, beispielsweise eine Hologrammschicht oder ein Verbund aus einer Mehrzahl von Hologrammschichten, ist ausgebildet, um den ersten Lichtstrahl 1010 in einen ersten Sichtbereich 1014 eines Auges 1016 eines Trägers der Datenbrille 1000 umzulenken und den zweiten Lichtstrahl 1012 in einen zweiten Sichtbereich 1018 des Auges 1016 umzulenken. Die beiden Sichtbereiche 1014, 1018 sind im Allgemeinen vollkommen deckungsgleich, d. h., beide Sichtbereiche decken das gesamte Sichtfeld bzw. Brillenglas ab. Das Umlenkelement 1008 erstreckt sich gemäß einem Ausführungsbeispiel über einen Großteil einer Oberfläche des Brillenglases 1006, um einen möglichst großen Bereich eines Sichtfelds des Auges 1016 abzudecken. Beispielsweise handelt es sich bei dem ersten Sichtbereich 1014 um einen zentralen Sichtbereich, innerhalb dessen das Auge 1016 Bilder mit hoher Sehschärfe wahrnehmen kann, und bei dem zweiten Sichtbereich 1018 um einen peripheren Sichtbereich, innerhalb dessen das Auge 1016 Bilder mit nur niedriger Sehschärfe wahrnehmen kann.

Gemäß einem Ausführungsbeispiel wird der erste Lichtstrahl 1010 derart durch die Bilderzeugungseinheit 1004 erzeugt, dass die erste Bildinformation eine höhere wahrnehmbare Bildschärfe aufweist als die durch den zweiten Lichtstrahl 1012 repräsentierte zweite Bildinformation, sodass die Bildinformation mit der größeren Bildschärfe nur in demjenigen der beiden Sichtbereiche 1014, 1018 angezeigt wird, in dem das Auge 1016 tatsächlich scharf sehen kann.

Gemäß dem in Fig. 4 gezeigten Ausführungsbeispiel umfasst die Datenbrille 1000 ferner ein Steuergerät 1020 zum Ansteuern der Bilderzeugungseinheit 1004. Hierzu sendet das Steuergerät 1020 ein entsprechendes Steuersignal 1022 an die Bilderzeugungseinheit 1004, wobei die Bilderzeugungseinheit 1004 ausgebildet ist, um unter Verwendung des Steuersignals 1022 den ersten Lichtstrahl 1010 und den zweiten Lichtstrahl 1012 zu erzeugen.

Je nach Ausführungsbeispiel kann die Bilderzeugungseinheit 1004 oder das Steuergerät 1020 an einem Brillengestell der Datenbrille 1000 befestigt sein.

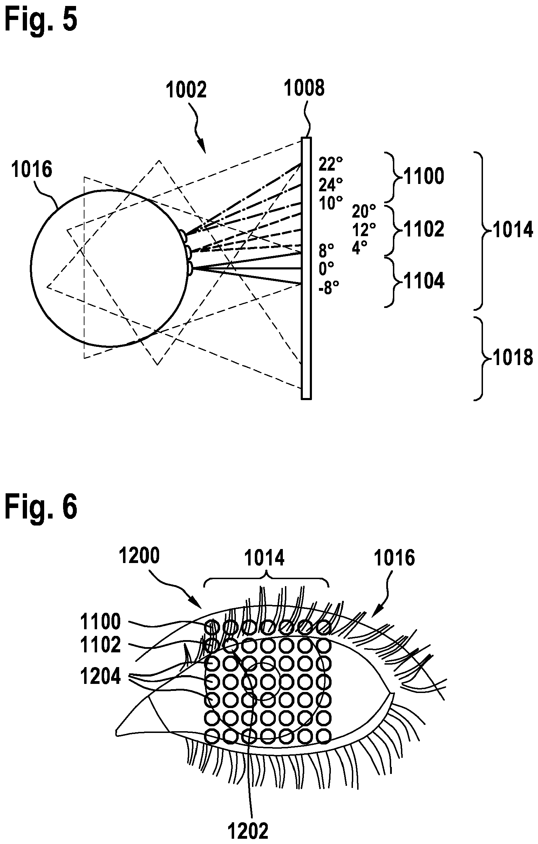

Fig. 5 zeigt eine schematische Darstellung einer Projektionsvorrichtung 1002 gemäß einem Ausführungsbeispiel, etwa einer Projektionsvorrichtung, wie sie vorangehend anhand von Fig. 4 beschrieben ist. Hierbei wird dem Auge 1016 im ersten Sichtbereich 1014, hier einem zentralen Sichtfeld, eine scharfe Bildinformation angeboten. Da dieses zentrale Sichtfeld für verschiedene Augenstellungen des Auges 1016 an verschiedenen Orten auf dem Umlenkelement 1008, hier einem holografischen optischen Element, zu liegen kommt, ist es beispielhaft in einen ersten Winkelbereich 1100, einen zweiten Winkelbereich 1102 und einen weiteren Winkelbereich 1104 unterteilt, wobei jedem der drei Winkelbereiche eine bestimmte Augenstellung des Auges 1016 zugeordnet ist. Die drei Winkelbereiche sind gemäß diesem Ausführungsbeispiel ausgebildet, um jeweils ein Sichtfeld von 16 Grad scharf darzustellen. Hierbei ist die Projektionsvorrichtung 1002 beispielsweise ausgebildet, um den verbleibenden zweiten Sichtbereich 1018 über eine weitere Eyebox mit eigener Lichtquelle und eigenem Umlenkelement, etwa einem weiteren holografischen optischen Element, darzustellen. Die weitere Eyebox weist eine bestimmte Mindestgröße auf, sodass die Pupille des Auges 1016 in jeder Augenstellung innerhalb der Eyebox liegt.

Auf die Darstellung der Winkelbereiche 1100, 1102, 1104 im unteren Bereich des Brillenglases 1018 wurde aus Gründen der Übersichtlichkeit verzichtet.

Das gesamte Sichtfeld ist in einzelne Unterbereiche 1100, 1102, 1104 unterteilt. In diesen Unterbereichen wird die erste Bildinformation über einen kollimierten, d. h. nicht oder kaum divergenten Lichtstrahl, etwa einen Laserstrahl, angeboten. Aufgrund des geringen Strahldurchmessers ergibt sich, wie weiter oben beschrieben, eine relativ kleine Eyebox mit theoretisch scharf wahrnehmbarer Bildinformation. Eine leichte Bewegung des Auges führt dazu, dass die Pupille nicht mehr getroffen wird. Da das Auge aber nur in einem kleinen Bereich wirklich scharf abbilden kann, wird die eine kleine Eyebox mit großem Winkelbereich analog zu den Unterbereichen 1100, 1102, 1104 in mehrere kleine Eyeboxen mit jeweils kleinem Winkelbereich unterteilt, wie nachfolgend anhand von Fig. 6 näher erläutert. Diese mehreren Eyeboxen werden dann derart angeordnet, dass sie in den jeweilig zugehörigen Augenstellungen die Pupille treffen. Es können auch mehrere Eyeboxen gleichzeitig mit der Pupille überlappen. Die erste Bildinformation in den einzelnen Eyeboxen sollte daher so zueinander verschoben angezeigt werden, dass keine Doppelbilder entstehen. Hierbei ist es wichtig, dass alle Eyeboxen mit der ersten Bildinformation dauerhaft und gleichzeitig eingeschaltet sind.

Die zweite Bildinformation wird ebenfalls im gesamten Sichtfeld angeboten.

Hierbei wird allerdings ein divergenter Lichtstrahl eingesetzt. Das Hologramm erzeugt die Divergenz aus dem ursprünglich kollimierten Laserstrahl. Der divergente Lichtstrahl hat zwei Effekte: Erstens wird eine große Eyebox erzeugt (siehe Fig. 5); zweitens wird die Bildinformation vom menschlichen Auge ohne Korrekturlinse nicht scharf abgebildet. Wenn nun allerdings nur der periphere Sichtbereich, der ohnehin nur unscharf abbilden kann, mit der zweiten Bildinformation versorgt wird, dann bleibt der Vorteil der großen Eyebox bestehen. Hierbei ist es wichtig, dass die zweite Bildinformation entsprechend der Erfindung im zentralen Sichtbereich immer abgeschaltet ist, damit sie nicht die scharfe Bildinformation überlagert. Da sich der zentrale Sichtbereich mit der Augenbewegung verschiebt, sollte die Augenbewegung per Eye-tracking mitverfolgt werden und die zweite Bildinformation entsprechend geregelt werden.

Je nach Ausführungsbeispiel sind zumindest zwei der drei Winkelbereiche 1100, 1102, 1104 benachbart zueinander angeordnet oder derart angeordnet, dass sich zumindest teilweise überlappen.

Mittels der Projektionsvorrichtung 1002 wird das Sichtfeld in zwei Bereiche aufgeteilt, den ersten, hier zentralen Sichtbereich 1014 mit hoher Sehschärfe und den zweiten, hier peripheren Sichtbereich 1018 mit niedriger Sehschärfe. Auf diese Weise wird die Bilddarstellung der Physiologie des menschlichen Auges angepasst.

Die Position des ersten Sichtbereichs 1014 auf dem Brillenglas oder dem sich darauf befindenden Umlenkelement 1008 hängt von der Augenstellung ab. Da sich die Pupille des Auges 1016 in verschiedenen Augenstellungen an verschiedenen Orten befindet, werden mehrere diesen Augenstellungen entsprechende Eyeboxen erzeugt. In Fig. 5 sind beispielhaft drei Eyeboxen für drei verschiedene Augen- bzw. Pupillenstellungen dargestellt. Jede der Eyeboxen deckt dabei einen beispielhaften Winkelbereich von 16 Grad ab. Damit das Auge 1016 für jede Augenstellung eine entsprechende Bildinformation erhält, sind die Eyeboxen beispielsweise räumlich angeordnet. Eine mögliche Anordnung der Eyeboxen ist in Fig. 6 gezeigt. Um einen sauberen, für das Auge nicht wahrnehmbaren Übergang zwischen den einzelnen Eyeboxen zu erreichen, kann die Projektionsvorrichtung 1002 ausgebildet sein, um die Eyeboxen, insbesondere zueinander benachbarte Eyeboxen, derart zu erzeugen, dass sich die Winkelbereiche überlappen. Obwohl die Winkelbereiche der Eyeboxen überlappen, ist es innerhalb geometrischer Grenzen möglich, die Eyeboxen dennoch räumlich getrennt auf ein und dieselbe Hologrammschicht als Umlenkelement zu schreiben.

Somit ist es prinzipiell möglich, alle in Fig. 6 gezeigten Eyeboxen mit einer einzigen Hologrammschicht und einer einzigen Lichtquelle darzustellen.

Die Projektionsvorrichtung 1002 kann beispielsweise mit einer Korrekturoptik, wie sie beispielsweise in einer Brille zum Einsatz kommt, kombiniert werden. Die Kombinierbarkeit mit Korrekturoptiken resultiert daraus, dass die holografischen Optiken auf gekrümmte Oberflächen, wie etwa geschliffene Brillengläser, aufgebracht werden können.

Für eine wahrheitsgetreue und verzerrungsfreie Bilddarstellung ist die Bilderzeugungseinheit ausgebildet, um den ersten oder zweiten Lichtstrahl derart zu erzeugen, dass eine darzustellende Bildinformation in jeder Augenposition als geometrisch korrektes Bild wahrgenommen wird. Dies ist insbesondere dann von Vorteil, wenn die Pupille des Auges 1016 gleichzeitig mehrere Eyeboxen betrachtet, wie dies normalerweise der Fall ist. Je nach Ausführungsbeispiel erfolgt eine entsprechende Umrechnung der Bilddaten entweder in der Bilderzeugungseinheit selbst, etwa mittels eines Mikrocontrollers oder FPGA, oder extern, etwa in einem mobilen Endgerät wie beispielsweise einem Handy.

Optional umfasst die Projektionsvorrichtung 1002 mehr als eine Lichtquelle oder mehr als ein Umlenkelement zur Erstellung der Eyeboxen im ersten Sichtbereich 1014. Insbesondere ist die Projektionsvorrichtung 1002 ausgebildet, um benachbarte Eyeboxen auf verschiedene Hologrammschichten als Umlenkelemente zu schreiben. Hierbei wird beispielsweise nur jede zweite Eyebox auf eine erste Hologrammschicht geschrieben, während die verbleibenden Eyeboxen auf eine zweite Hologrammschicht geschrieben werden. Auf diese Weise ist es möglich, Eyeboxen mit größeren Winkelbereichen zu generieren. Zusätzlich oder alternativ kann dadurch ein größerer räumlicher Sicherheitsabstand zwischen den Bereichen der einzelnen Eyeboxen auf den Hologrammschichten gewährleistet werden.

Gemäß einem Ausführungsbeispiel dient die Projektionsvorrichtung 1002 zur Darstellung monochromer Bildinformationen. Durch die Verwendung verschiedenfarbiger Lichtquellen, etwa im RGB-Bereich, ist es jedoch auch möglich, Farbbilder mittels der Projektionsvorrichtung 1002 darzustellen. Die Anzahl erforderlicher Lichtquellen und erforderlicher Umlenkelemente würde sich hierzu entsprechend verdreifachen. Um den Bauraum eines solchen RGB-Systems dennoch klein zu halten, ist beispielsweise eine Kombination mehrerer Lichtquellen auf Chipebene denkbar, etwa über on-chip waveguides.

Die dazu erforderliche Augenpositionsverfolgung erfolgt beispielsweise direkt über einen bereits verbauten Laserscanner als Augenpositionsermittlungseinheit. Hierzu wird zumindest eine der bereits verbauten Lichtquellen im sichtbaren Wellenlängenbereich oder auch eine weitere Lichtquelle im unsichtbaren Wellenlängenbereich, etwa im Infrarotbereich, verwendet. Eine Rückmessung erfolgt beispielsweise über einen optischen Sendepfad, d. h. etwa über einen Mikrospiegel, oder über einen an anderer Stelle im System verbauten geeigneten Detektor. Alternativ umfasst die Augenpositionsermittlungseinheit eine Kamera zum Erfassen der Augenpositionen.

Die Ermittlung der Blickrichtung, d. h. der Augenposition, kann auch über eine Messung des Augenhintergrundes erfolgen. Hierzu kann zum Beispiel ausgenutzt werden, dass der Augenhintergrund zwecks Bilderzeugung mit einem Laserstrahl abgerastert wird. Wenn nun ein optischer Rückkanal vorgesehen wird, dann kann ein Bild des Augenhintergrundes und der darin verlaufenden Blutgefäße erzeugt werden. Aus Verschiebungen dieses Bildes, wie sie bei Augenbewegungen auftreten, kann beispielsweise in ähnlicher Weise wie bei einer optischen Computermaus auf die Augenbewegung zurückgeschlossen werden.

Mittels der Projektionsvorrichtung 1002 kann beispielsweise ein Laserstrahl direkt auf die Netzhaut des Auges 1016 geschrieben werden. Somit ist es möglich, ein Abbild oder Video der Netzhaut mittels der Projektionsvorrichtung 1002 zu erzeugen. Dies erfolgt beispielsweise durch eine entsprechende Rückmessung über den optischen Sendepfad. Mit einem derartigen System kann beispielsweise der Träger der Datenbrille anhand einer Aderstruktur der Netzhaut geometrisch identifiziert werden. Denkbar wäre auch die Bestimmung eines Pulsschlags in Abhängigkeit vom Pulsieren der in der Netzhaut verlaufenden Adern oder einer Sauerstoffsättigung über eine Farbe des in den Adern fließenden Bluts.

Fig. 6 zeigt eine schematische Darstellung einer Anordnung von Eyeboxen 1200, 1204 zur Darstellung von Bildinformationen mittels eines Umlenkelements gemäß einem Ausführungsbeispiel. Gezeigt ist eine beispielhafte Anordnung der Eyeboxen für die scharfe Darstellung des ersten Sichtbereichs 1014, hier des zentralen Sichtfelds des Auges 1016. Der erste Sichtbereich 1014 umfasst gemäß diesem Ausführungsbeispiel neben der Eyebox 1200 für den ersten Winkelbereich 1100 und der Eyebox 1202 für den zweiten Winkelbereich 1102 eine Mehrzahl weiterer Eyeboxen 1204, die in einem Raster, hier einem quadratischen Raster, um die Pupille des Auges 1016 herum angeordnet sind.

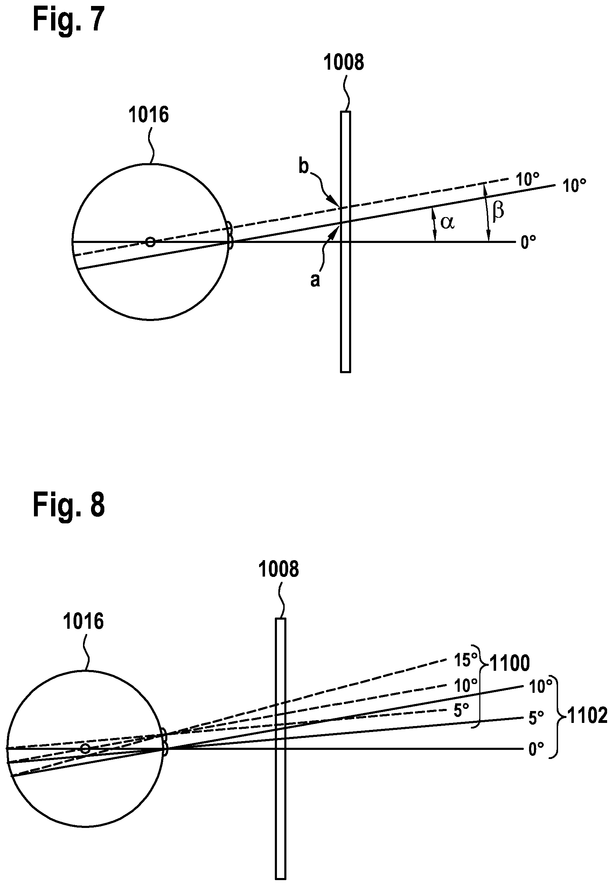

Jede dieser Eyeboxen deckt einen eigenen Winkelbereich des ersten Sichtbereichs 1014 ab. Hierbei können sich die Winkelbereiche, besonders diejenigen benachbarter Eyeboxen, überlappen. Fig. 8 zeigt eine solche Überlappung in der Seitenansicht.

Fig. 7 zeigt eine schematische Darstellung eines Zusammenhangs zwischen einer Orientierung eines Auges 1016 und einer Bildposition auf einem Umlenkelement 1008 gemäß einem Ausführungsbeispiel. Das Umlenkelement 1008 ist beispielsweise Teil einer Projektionsvorrichtung, wie sie vorangehend anhand der Figuren 4 bis 6 beschrieben ist. Gezeigt ist das Brillenglas mit einem holografischen optischen Element als Umlenkelement 1008. Gemäß diesem Ausführungsbeispiel ist das Umlenkelement 1008 ausgebildet, um einen Bildpunkt im Sichtfeld bei 10 Grad einzublenden.

Fixiert das Auge 1016 beispielsweise auf β = 0°, so wird der Bildpunkt bei α = 10° erzeugt, d. h., der Bildpunkt wird an der Stelle a auf dem Umlenkelement 1008 abgebildet.

Fixiert das Auge 1016 hingegen auf β = 10°, so wird der Bildpunkt bei α = 0° erzeugt, d. h., der Bildpunkt wird an der Stelle b auf dem Umlenkelement 1008 abgebildet. Somit wird die gleiche Bildinformation an zwei verschiedenen Orten auf dem Umlenkelement 1008 erzeugt.

Fig. 8 zeigt eine schematische Darstellung zweier überlappender Winkelbereiche zur Darstellung von Bildinformationen mittels eines Umlenkelements 1008 gemäß einem Ausführungsbeispiel. Gezeigt sind zwei auf dem Umlenkelement 1008 räumlich voneinander getrennte Eyeboxen mit den zugehörigen Augenstellungen des Auges 1016. Die Überlappung kommt gemäß diesem Ausführungsbeispiel zustande, wenn das Auge auf β = 0° oder auf β = 10° fixiert. Obwohl die Eyeboxen auf dem Umlenkelement 1008 räumlich voneinander getrennt sind, überlappen sich die beiden Winkelbereiche 1100, 1102.

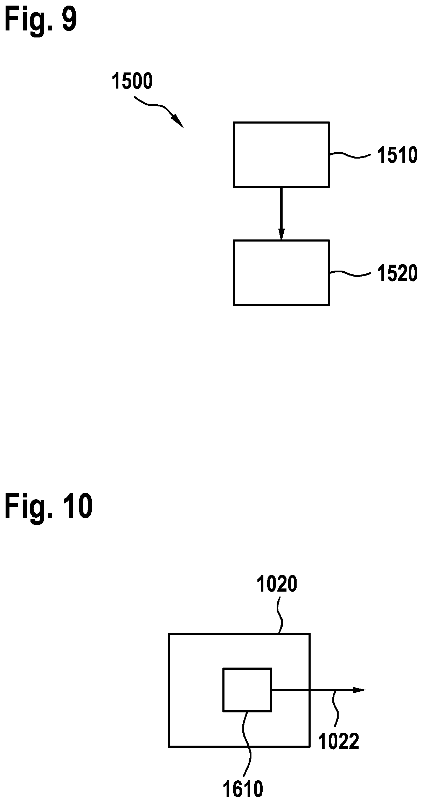

Fig. 9 zeigt ein Ablaufdiagramm eines Verfahrens 1500 gemäß einem Ausführungsbeispiel. Das Verfahren 1500 kann beispielsweise unter Verwendung einer Projektionsvorrichtung, wie sie vorangehend anhand der Figuren 4 bis 8 beschrieben ist, durchgeführt werden. Hierbei werden in einem Schritt 1510 der erste und der zweite Lichtstrahl bzw. entsprechende Strahlenbündel durch die Bilderzeugungseinheit erzeugt. In einem weiteren Schritt 1520 wird der erste Lichtstrahl bzw. das erste Strahlenbündel unter Verwendung des Umlenkelements derart umgelenkt, dass die erste Bildinformation innerhalb des ersten Sichtbereichs dargestellt wird. In entsprechender Weise wird der zweite Lichtstrahl umgelenkt, um die zweite Bildinformation innerhalb des zweiten Sichtbereichs darzustellen.

Fig. 10 zeigt eine schematische Darstellung eines Steuergeräts 1020 gemäß einem Ausführungsbeispiel, etwa eines Steuergeräts, wie es vorangehend anhand von Fig. 4 beschrieben ist. Das Steuergerät 1020 umfasst eine Erzeugungseinheit 1610, die ausgebildet ist, um das Steuersignal 1022 zum Steuern der Bilderzeugungseinheit zu erzeugen.

Je nach Ausführungsbeispiel ist das Steuergerät 1020 als eine externe Einheit oder als eine in die Bilderzeugungseinheit integrierte Einheit realisiert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Projektionsvorrichtung (1002) für eine Datenbrille (1000), wobei die Projektionsvorrichtung (1002) folgende Merkmale aufweist:
eine Bilderzeugungseinheit (1004) zum Erzeugen zumindest eines eine erste Bildinformation repräsentierenden ersten Lichtstrahls (1010) und eines eine zweite Bildinformation repräsentierenden zweiten Lichtstrahls (1012), wobei sich die erste Bildinformation und die zweite Bildinformation hinsichtlich einer wahrnehmbaren Bildschärfe voneinander unterscheiden, wobei die Bilderzeugungseinheit (1004) ausgebildet ist, um den ersten Lichtstrahl (1010) und den zweiten Lichtstrahl (1012) derart zu erzeugen, dass die erste Bildinformation eine höhere wahrgenommene Bildschärfe als die zweite Bildinformation aufweist; und
zumindest ein Umlenkelement (1008), das ausgebildet ist, um die erste Bildinformation unter Verwendung des ersten Lichtstrahls (1010) innerhalb eines ersten Sichtbereichs (1014) eines Auges (1016) darzustellen und die zweite Bildinformation unter Verwendung des zweiten Lichtstrahls (1012) innerhalb eines zweiten Sichtbereichs (1018) des Auges (1016) darzustellen, wobei sich der zweite Sichtbereich (1018) außerhalb des ersten Sichtbereichs (1014) befindet, wobei das Umlenkelement (1008) ausgebildet ist, um die erste Bildinformation innerhalb eines zentralen Sichtbereichs des Auges (1016) als den ersten Sichtbereich (1014) und/oder die zweite Bildinformation innerhalb eines peripheren Sichtbereichs des Auges (1016) als den zweiten Sichtbereich (1018) darzustellen, wobei sich der umgelenkte erste Lichtstrahl (1010) und der umgelenkte zweite Lichtstrahl (1012) hinsichtlich einer Strahldivergenz voneinander unterscheiden, wobei es sich bei dem Umlenkelement um ein Hologramm handelt, und
ein Steuergerät (1020), welches eine Erzeugungseinheit (1610) umfasst, wobei die Erzeugungseinheit (1610) dazu ausgebildet ist, ein Steuersignal (1022) zum Steuern der Bilderzeugungseinheit zu erzeugen,
**dadurch gekennzeichnet, dass**
das Umlenkelement (1008) ausgebildet ist, den ersten Lichtstrahl (1010) und den zweiten Lichtstrahl (1012) derart umzulenken, dass der erste Lichtstrahl (1010) den gesamten Sichtbereich (1014, 1018) und der zweite Lichtstrahl (1012) den gesamten Sichtbereich (1014, 1018) abdeckt, wobei die zweite Bildinformation im zentralen Sichtbereich immer abgeschaltet ist.

2. Projektionsvorrichtung (1002) gemäß Anspruch 1, **dadurch gekennzeichnet, dass** das Umlenkelement (1008) ausgebildet ist, um die erste Bildinformation innerhalb eines einer ersten Position des Auges (1016) zugeordneten ersten Winkelbereichs (1100) des ersten Sichtbereichs (1014) und/oder innerhalb eines einer weiteren Position des Auges (1016) zugeordneten weiteren Winkelbereichs (1102) des ersten Sichtbereichs (1014) darzustellen.

3. Projektionsvorrichtung (1002) gemäß Anspruch 2, **dadurch gekennzeichnet, dass** das Umlenkelement (1008) ausgebildet ist, um die erste Bildinformation innerhalb eines benachbart zu dem zweiten Winkelbereich (1102) angeordneten oder zumindest teilweise mit dem zweiten Winkelbereich (1102) überlappenden Winkelbereichs als des ersten Winkelbereichs (1100) darzustellen.

4. Projektionsvorrichtung (1002) gemäß einem der vorangegangenen Ansprüche, **dadurch gekennzeichnet, dass** das Umlenkelement (1008) ausgebildet ist, um die erste Bildinformation innerhalb zumindest eines einer weiteren Position des Auges (1016) zugeordneten weiteren Winkelbereichs (1104) des ersten Sichtbereichs (1014) darzustellen.

5. Projektionsvorrichtung (1002) gemäß einem der vorangegangenen Ansprüche, **dadurch gekennzeichnet, dass** das Umlenkelement (1008) zumindest eine Hologrammschicht zum Umlenken des ersten Lichtstrahls (1010) und/oder des zweiten Lichtstrahls (1012) umfasst.

6. Projektionsvorrichtung (1002) gemäß einem der vorangegangenen Ansprüche, **gekennzeichnet durch** zumindest ein weiteres Umlenkelement und eine weitere Lichtquelle, wobei das weitere Umlenkelement ausgebildet ist um die erste Bildinformation unter Verwendung des Lichtstrahls der weiteren Lichtquelle innerhalb des ersten Sichtbereichs (1014) darzustellen, insbesondere wobei das Umlenkelement ausgebildet ist, um zumindest eine erste Eyebox zum Wahrnehmen der ersten Bildinformation innerhalb des ersten Sichtbereichs (1014) zu erzeugen, und das weitere Umlenkelement ausgebildet ist, um zumindest eine zweite Eyebox zum Wahrnehmen der ersten Bildinformation innerhalb des ersten Sichtbereichs (1014) zu erzeugen, insbesondere wobei die erste Eyebox und die zweite Eyebox benachbart zueinander angeordnet sind.

7. Projektionsvorrichtung (1002) gemäß einem der vorangegangenen Ansprüche, **gekennzeichnet durch** ein Brillenglas (1006), wobei das Umlenkelement (1008) als Teil des Brillenglases (1006) realisiert ist und/oder auf das Brillenglas (1006) aufgebracht ist.

8. Projektionsvorrichtung (1002) gemäß Anspruch 7, **dadurch gekennzeichnet, dass** sich das Umlenkelement (1008) über zumindest einen Hauptanteil einer Oberfläche des Brillenglases (1006) erstreckt.

9. Projektionsvorrichtung (1002) gemäß einem der vorangegangenen Ansprüche, **gekennzeichnet durch** eine Augenpositionsermittlungseinheit zum Ermitteln einer Augenposition des Auges (1016), wobei die Bilderzeugungseinheit (1004) ausgebildet ist, um den ersten Lichtstrahl (1010) und/oder den zweiten Lichtstrahl (1012) in Abhängigkeit von der Augenposition zu erzeugen und/oder wobei die Augenpositionsermittlungseinheit ausgebildet ist, um die Augenposition unter Verwendung eines Lasers zu ermitteln.

10. Projektionsvorrichtung (1002) gemäß einem der vorangegangenen Ansprüche, **dadurch gekennzeichnet, dass** die Bilderzeugungseinheit (1004) ausgebildet ist, um den ersten Lichtstrahl (1010) und/oder den zweiten Lichtstrahl (1012) derart zu erzeugen, dass die erste Bildinformation und/oder die zweite Bildinformation ein zumindest zweifarbiges, insbesondere mehrfarbiges Bild repräsentiert.

11. Verfahren (1500) zum Darstellen von Bildinformationen mittels einer Projektionsvorrichtung (1002) gemäß einem der vorangegangenen Ansprüche, wobei das Verfahren (1500) folgende Schritte umfasst:
Erzeugen (1510) des ersten Lichtstrahls (1010) und des zweiten Lichtstrahls (1012), wobei der erste Lichtstrahl (1010) und der zweite Lichtstrahl (1012) derart erzeugt werden, dass die erste Bildinformation eine höhere wahrgenommene Bildschärfe als die zweite Bildinformation aufweist; und
Umlenken (1520) des ersten Lichtstrahls (1010), um die erste Bildinformation innerhalb des ersten Sichtbereichs (1014) darzustellen, und des zweiten Lichtstrahls (1012), um die zweite Bildinformation innerhalb des zweiten Sichtbereichs (1018) darzustellen, um die erste Bildinformation innerhalb eines zentralen Sichtbereichs des Auges (1016) als den ersten Sichtbereich (1014) und/oder die zweite Bildinformation innerhalb eines peripheren Sichtbereichs des Auges (1016) als den zweiten Sichtbereich (1018) darzustellen, wobei sich der umgelenkte erste Lichtstrahl (1010) und der umgelenkte zweite Lichtstrahl (1012) hinsichtlich einer Strahldivergenz voneinander unterscheiden,
**dadurch gekennzeichnet, dass**
das Umlenken (15120) derart erfolgt, dass der erste Lichtstrahl (1010) den gesamten Sichtbereich (1014, 1018) abdeckt und der zweite Lichtstrahl (1012) den gesamten Sichtbereich (1014, 1018) abdeckt,
wobei die zweite Bildinformation im zentralen Sichtbereich immer abgeschaltet ist.

12. Computerprogramm, das ausgebildet ist, um das Verfahren (1500) gemäß Anspruch 11 in einer Projektionsvorrichtung nach Anspruch 1 auszuführen und/oder anzusteuern.

13. Maschinenlesbares Speichermedium, auf dem das Computerprogramm nach Anspruch 12 gespeichert ist.

## Claims

1. Projection device (1002) for smartglasses (1000), the projection device (1002) having the following features:
an image generating unit (1004) for generating at least one first light beam (1010) representing first image information and a second light beam (1012) representing second image information, the first image information and the second image information differing from one another with regard to a perceptible image sharpness, the image generating unit (1004) being configured to generate the first light beam (1010) and the second light beam (1012) in such a way that the first image information has a higher perceived image sharpness than the second image information; and
at least one deflection element (1008) configured to present the first image information using the first light beam (1010) within a first field of view (1014) of an eye (1016) and to present the second image information using the second light beam (1012) within a second field of view (1018) of the eye (1016), the second field of view (1018) being located outside the first field of view (1014), the deflection element (1008) being configured to present the first image information within a central field of view of the eye (1016) as the first field of view (1014) and/or to present the second image information within a peripheral field of view of the eye (1016) as the second field of view (1018), the deflected first light beam (1010) and the deflected second light beam (1012) differing from one another with regard to a beam divergence, the deflection element being a hologram, and
a controller (1020) comprising a generating unit (1610), the generating unit (1610) being configured to generate a control signal (1022) for controlling the image generating unit,
**characterized in that**
the deflection element (1008) is configured to deflect the first light beam (1010) and the second light beam (1012) in such a way that the first light beam (1010) covers the entire field of view (1014, 1018) and the second light beam (1012) covers the entire field of view (1014, 1018), the second image information always being switched off in the central field of view.

2. Projection device (1002) according to Claim 1, **characterized in that** the deflection element (1008) is configured to present the first image information within a first angular range (1100) of the first field of view (1014), said first angular range being assigned to a first position of the eye (1016), and/or within a further angular range (1102) of the first field of view (1014), said further angular range being assigned to a further position of the eye (1016).

3. Projection device (1002) according to Claim 2, **characterized in that** the deflection element (1008) is configured to present the first image information within an angular range - as the first angular range (1100) - which is arranged adjacent to the second angular range (1102) or which at least partly overlaps the second angular range (1102).

4. Projection device (1002) according to any of the preceding claims, **characterized in that** the deflection element (1008) is configured to present the first image information within at least one further angular range (1104) of the first field of view (1014) that is assigned to a further position of the eye (1016).

5. Projection device (1002) according to any of the preceding claims, **characterized in that** the deflection element (1008) comprises at least one hologram layer for deflecting the first light beam (1010) and/or the second light beam (1012).

6. Projection device (1002) according to any of the preceding claims, **characterized by** at least one further deflection element and a further light source, the further deflection element being configured to present the first image information using the light beam of the further light source within the first field of view (1014), in particular the deflection element being configured to generate at least one first eyebox for perceiving the first image information within the first field of view (1014), and the further deflection element being configured to generate at least one second eyebox for perceiving the first image information within the first field of view (1014), in particular the first eyebox and the second eyebox being arranged adjacent to one another.

7. Projection device (1002) according to any of the preceding claims, **characterized by** a spectacle lens (1006), the deflection element (1008) being realized as part of the spectacle lens (1006) and/or being applied to the spectacle lens (1006).

8. Projection device (1002) according to Claim 7, **characterized in that** the deflection element (1008) extends over at least a main part of a surface of the spectacle lens (1006).

9. Projection device (1002) according to any of the preceding claims, **characterized by** an eye position determining unit for determining an eye position of the eye (1016), the image generating unit (1004) being configured to generate the first light beam (1010) and/or the second light beam (1012) as a function of the eye position, and/or the eye position determining unit being configured to determine the eye position using a laser.

10. Projection device (1002) according to any of the preceding claims, **characterized in that** the image generating unit (1004) is configured to generate the first light beam (1010) and/or the second light beam (1012) in such a way that the first image information and/or the second image information represent(s) an at least two-colour, in particular multicolour, image.

11. Method (1500) for presenting image information by means of a projection device (1002) according to any of the preceding claims, the method (1500) comprising the following steps:
generating (1510) the first light beam (1010) and the second light beam (1012), the first light beam (1010) and the second light beam (1012) being generated in such a way that the first image information has a higher perceived image sharpness than the second image information; and
deflecting (1520) the first light beam (1010) in order to present the first image information within the first field of view (1014), and the second light beam (1012) in order to present the second image information within the second field of view (1018), in order to present the first image information within a central field of view of the eye (1016) as the first field of view (1014) and/or to present the second image information within a peripheral field of view of the eye (1016) as the second field of view (1018), the deflected first light beam (1010) and the deflected second light beam (1012) differing from one another with regard to a beam divergence,
**characterized in that**
the deflecting (15120) is effected in such a way that the first light beam (1010) covers the entire field of view (1014, 1018) and the second light beam (1012) covers the entire field of view (1014, 1018), the second image information always being switched off in the central field of view.

12. Computer program configured to carry out and/or to control the method (1500) according to Claim 11 in a projection device according to Claim 1.

13. Machine-readable storage medium on which the computer program according to Claim 12 is stored.

## Revendications

1. Dispositif de projection (1002) destiné à des lunettes de données (1000), le dispositif de projection (1002) comportant les caractéristiques suivantes :
une unité de génération d'image (1004) destinée à générer au moins un premier faisceau de lumière (1010) représentant une première information d'image et un deuxième faisceau de lumière (1012) représentant une deuxième information d'image, la première information d'image et la deuxième information d'image différant l'une de l'autre par une netteté d'image perceptible, l'unité de génération d'image (1004) étant conçue pour générer le premier faisceau de lumière (1010) et le deuxième faisceau de lumière (1012) de manière à ce que la première information d'image ait une netteté d'image perçue supérieure à celle de la deuxième information d'image ; et
au moins un élément de déviation (1008), qui est conçu pour représenter la première information d'image à l'aide du premier faisceau de lumière (1010) dans une première zone de vision (1014) d'un œil (1016) et la deuxième information d'image à l'aide du deuxième faisceau de lumière (1012) à l'intérieur d'une deuxième zone de vision (1018) de l'œil (1016), la deuxième zone de vision (1018) étant située à l'extérieur de la première zone de vision (1014), l'élément de déviation (1008) étant conçu pour représenter la première information d'image dans une zone de vision centrale de l'œil (1016) comme première zone de vision (1014) et/ou la deuxième information d'image dans une zone de vision périphérique de l'œil (1016) comme deuxième zone de vision (1018), le premier faisceau de lumière dévié (1010) et le deuxième faisceau de lumière dévié (1012) différant l'un de l'autre par une divergence de faisceau, l'élément de déviation étant un hologramme, et un dispositif de commande (1020) qui comprend une unité de génération (1610), l'unité de génération (1610) étant conçue pour générer un signal de commande (1022) destiné à commander l'unité de génération d'image,
**caractérisé en ce que**
l'élément de déviation (1008) est conçu pour dévier le premier faisceau de lumière (1010) et le deuxième faisceau de lumière (1012) de manière à ce que le premier faisceau de lumière (1010) couvre toute la zone de vision (1014, 1018) et le deuxième faisceau de lumière (1012) couvre toute la zone de vision (1014, 1018), la deuxième information d'image étant toujours désactivée dans la zone de vision centrale.

2. Dispositif de projection (1002) selon la revendication 1, **caractérisé en ce que** l'élément de déviation (1008) est conçu pour représenter la première information d'image dans une première plage angulaire (1100), associée à une première position de l'œil (1016), de la première zone de vision (1014) et/ou dans une autre plage angulaire (1102), associée à une autre position de l'œil (1016), de la première zone de vision (1014).

3. Dispositif de projection (1002) selon la revendication 2, **caractérisé en ce que** l'élément de déviation (1008) est conçu pour représenter la première information d'image dans une plage angulaire, comme première plage angulaire (1100), disposée de manière adjacente à la deuxième plage angulaire (1102) ou recouvrant au moins partiellement la deuxième plage angulaire (1102).

4. Dispositif de projection (1002) selon l'une des revendications précédentes, **caractérisé en ce que** l'élément de déviation (1008) est conçu pour représenter la première information d'image dans au moins une autre plage angulaire (1104), associée à une autre position de l'œil (1016), de la première zone de vision (1014).

5. Dispositif de projection (1002) selon l'une des revendications précédentes, **caractérisé en ce que** l'élément de déviation (1008) comprend au moins une couche d'hologramme destinée à dévier le premier faisceau de lumière (1010) et/ou le deuxième faisceau de lumière (1012).

6. Dispositif de projection (1002) selon l'une des revendications précédentes, **caractérisé par** au moins un autre élément de déviation et une autre source de lumière, l'autre élément de déviation étant conçu pour représenter la première information d'image à l'aide du faisceau de lumière de l'autre source de lumière dans la première zone de vision (1014), en particulier l'élément de déviation étant conçu pour générer au moins un premier « eye box » pour percevoir la première information d'image dans la première zone de vision (1014), et l'autre élément de déviation étant conçu pour générer au moins un deuxième « eye box » pour percevoir la première information d'image dans la première zone de vision (1014), notamment le premier « eye box » et le deuxième « eye box » étant disposés de manière adjacente l'un à l'autre.

7. Dispositif de projection (1002) selon l'une des revendications précédentes, **caractérisé par** un verre de lunettes (1006), l'élément de déviation (1008) étant réalisé en tant que partie du verre de lunettes (1006) et/ou étant appliqué sur le verre de lunettes (1006).

8. Dispositif de projection (1002) selon la revendication 7, **caractérisé en ce que** l'élément de déviation (1008) s'étend sur au moins une majeure partie d'une surface du verre de lunettes (1006).

9. Dispositif de projection (1002) selon l'une des revendications précédentes, **caractérisé par** une unité de détermination de position d'œil destinée à déterminer une position de l'œil (1016), l'unité de génération d'image (1004) étant conçue pour générer le premier faisceau de lumière (1010) et/ou le deuxième faisceau de lumière (1012) en fonction de la position de l'œil et/ou l'unité de détermination de position d'œil étant conçue pour déterminer la position de l'œil à l'aide d'un laser.

10. Dispositif de projection (1002) selon l'une des revendications précédentes, **caractérisé en ce que** l'unité de génération d'image (1004) est conçue pour générer le premier faisceau de lumière (1010) et/ou le deuxième faisceau de lumière (1012) de manière à ce que la première information d'image et/ou la deuxième information d'image représentent une image au moins bicolore, en particulier multicolore.

11. Procédé (1500) de représentation d'informations d'image au moyen d'un dispositif de projection (1002) selon l'une des revendications précédentes, le procédé (1500) comprenant les étapes suivantes :
générer (1510) le premier faisceau de lumière (1010) et le deuxième faisceau de lumière (1012), le premier faisceau de lumière (1010) et le deuxième faisceau de lumière (1012) étant générés de manière à ce que la première information d'image ait une netteté d'image perçue supérieure à celle de la deuxième information d'image ; et
dévier (1520) le premier faisceau de lumière (1010) pour représenter la première information d'image dans la première zone de vision (1014) et le deuxième faisceau de lumière (1012) pour représenter la deuxième information d'image dans la deuxième zone de vision (1018), pour représenter la première information d'image dans une zone de vision centrale de l'œil (1016) comme première zone de vision (1014) et/ou la deuxième information d'image dans une zone de vision périphérique de l'œil (1016) comme deuxième zone de vision (1018), le premier faisceau de lumière dévié (1010) et le deuxième faisceau de lumière dévié (1012) différant l'un de l'autre par une divergence de faisceau,
**caractérisé en ce que**
la déviation (15120) est effectuée de manière à ce que le premier faisceau de lumière (1010) couvre toute la zone de vision (1014, 1018) et le deuxième faisceau de lumière (1012) couvre toute la zone de vision (1014, 1018), la deuxième information d'image étant toujours désactivée dans la zone de vision centrale.

12. Logiciel conçu pour mettre en œuvre et/ou commander le procédé (1500) selon la revendication 11 dans un dispositif de projection selon la revendication 1.

13. Support de stockage lisible par machine sur lequel le logiciel selon la revendication 12 est stocké.
